# EUROPÄISCHE PATENTSCHRIFT

(11) **EP 2 561 913 B1**
(45) Veröffentlichungstag und Bekanntmachung des Hinweises auf die Patenterteilung: **28.03.2018**
(21) Anmeldenummer: 12181626.8
(22) Anmeldetag: 24.08.2012
(51) Int. Cl.: B01D 29/33, B01D 29/64, B01D 29/68, B01D 29/90, B01D 33/073, B01D 33/27, B01D 33/46, B01D 33/50, B01D 33/72

(54) **Filtrationgsvorrichtung**
Filtration device
Dispositif de filtration

(30) Priorität: 26.08.2011 DE 102011081645
(43) Veröffentlichungstag der Anmeldung: 27.02.2013
(73) Patentinhaber: Filtration Group GmbH, 74613 Öhringen (DE)
(72) Erfinder: Stötzer, Dietrich, 74613 Öhringen (DE); Kübler, Uwe, 74613 Öhringen (DE)
(74) Vertreter: BRP Renaud & Partner mbB Rechtsanwälte Patentanwälte Steuerberater

(56) Entgegenhaltungen:
- DE-A1- 10 252 785
- DE-A1- 19 803 083
- DE-A1-102007 014 573

## Beschreibung

Die vorliegende Erfindung betrifft eine Filtrationsvorrichtung zum Filtern von Flüssigkeiten. Die Erfindung betrifft außerdem ein Verfahren zum Umrüsten einer Filtrationsvorrichtung mit Fremddruckrückspülung in eine Filtrationsvorrichtung mit Eigendruckrückspülung.

Filtrationsvorrichtungen kommen beispielsweise in der industriellen Fertigung zum Einsatz, um hydraulische Arbeitsmedien zyklisch reinigen zu können. Häufiger Anwendungsfall ist dabei die Reinigung von Kühl-/Schmierstoffen.

Eine Filtrationsvorrichtung kann bei einem herkömmlichen Aufbau ein Gehäuse aufweisen, das einen rohseitigen Einlassanschluss und einen reinseitigen Auslassanschluss aufweist, wobei im Gehäuse ein Filterkörper angeordnet ist, der beispielsweise zylindrisch ausgestaltet und radial von der zu reinigenden Flüssigkeit durchströmbar sein kann. Der Filterkörper trennt dabei radial im Gehäuse eine außenliegende Rohseite von einer innenliegenden Reinseite.

Während der Filtrationswirkung können sich abgereinigte Verunreinigungen auf der Rohseite, also an der Außenseite des Filterkörpers anlagern. Um einen dauerhaften Filtrationsbetrieb aufrechterhalten zu können, ist es erforderlich, diese Verunreinigungen während des Betriebs der Filtrationsvorrichtung zu entfernen. Dies kann beispielsweise mittels Schabern oder mittels Bürsten oder aber mit Hilfe eines Spülmediums realisiert werden. Besonders effizient ist dabei eine Rückspülung des Filterkörpers mit einem Spülmedium von innen nach außen. Damit während des Reinigungsvorgangs des Filterkörpers der Filtrationsbetrieb weitgehend ungestört fortgesetzt werden kann, ist es zweckmäßig, nur einen vergleichsweise kleinen Umfangsabschnitt des Filterkörpers zu reinigen und für eine relative Drehbewegung zwischen dem Filterkörper und der jeweiligen Reinigungsvorrichtung zu sorgen, so dass permanent der zu reinigende Umfangsabschnitt in der Umfangsrichtung verändert wird, so dass im Laufe der Zeit der gesamte Umfang zyklisch abgereinigt werden kann.

Zweckmäßig kann somit eine Rückspüleinrichtung vorgesehen sein, mit deren Hilfe ein Umfangsabschnitt des Filterkörpers rückgespült werden kann. Eine derartige Rückspüleinrichtung kann beispielsweise einen stationär auf der Rohseite im Gehäuse angeordneten Abführkanal aufweisen, der eintrittsseitig zumindest eine dem zu spülenden Umfangsabschnitt zugewandte Eintrittsöffnung aufweist und der austrittsseitig mit einem am Gehäuse ausgebildeten Abführkanalanschluss verbunden ist. Des Weiteren kann eine solche Rückspüleinrichtung einen stationär auf der Reinseite im Gehäuse angeordneten Zuführkanal aufweisen, der austrittsseitig zumindest eine dem zu spülenden Umfangsabschnitt zugeordnete Austrittsöffnung aufweist und der eintrittsseitig mit dem jeweiligen Spülmedium versorgt wird. Sofern die Rückspüleinrichtung mit einem stationären Abführkanal und einem stationären Zuführkanal arbeitet, ist die Filtrationsvorrichtung zweckmäßig mit einem Drehantrieb zum drehenden Antreiben des Filterkörpers ausgestattet, der beispielsweise eine Antriebswelle besitzt, die mit dem Filterkörper zur Drehmomentübertragung gekoppelt ist. Diese Antriebswelle kann beispielsweise durch eine entsprechende Wand des Gehäuses hindurchgeführt sein und mit einem entsprechenden Antriebsmotor verbunden sein.

Zum Rückspülen des Filterkörpers eignet sich in besonderer Weise die gereinigte Flüssigkeit. Besonders effizient ist eine Rückspülung mit Fremddruck, wodurch besonders hohe Druckdifferenzen zwischen dem im Zuführkanal herrschenden Druck und dem im Abführkanal herrschenden Druck realisierbar sind. Im Abführkanal herrscht üblicherweise Umgebungsdruck, also im Wesentlichen etwa 1 bar. Bei bestimmten Anwendungen kann jedoch auch eine Rückspülung mit Eigendruck ausreichend sein, wobei dann der in der Filtrationseinrichtung auf der Reinseite ohnehin herrschende Druck genutzt wird, um das Spülmittel anzutreiben. Die dann zur Verfügung stehende Druckdifferenz zwischen Zuführkanal und Abführkanal entspricht dann im Wesentlichen der Druckdifferenz zwischen Reinseite und Abführkanal bzw. Umgebungsdruck.

Aus der DE 10 2007 014 573 A1 ist eine gattungsgemäße Filtrationsvorrichtung bekannt, bei der ein Zuführkanal zur Versorgung wenigstens einer Austrittsöffnung zentral angeordnet ist und mit einer Antriebswelle zum drehenden Antreiben des Filterkörpers fest verbunden ist. Die bekannte Filtrationsvorrichtung arbeitet allerdings mit Fremddruckrückspülung.

Eine weitere Filtrationsvorrichtung mit Fremddruckrückspülung ist aus der DE 198 03 083 A1 bekannt.

Die vorliegende Erfindung beschäftigt sich mit dem Problem, für eine Filtrationsvorrichtung der eingangs genannten Art eine verbesserte Ausführungsform anzugeben, die sich insbesondere dadurch auszeichnet, dass eine effiziente Eigendruckrückspülung mit vergleichsweise geringem baulichem Aufwand realisierbar ist. Des Weiteren soll eine mit Fremddruckrückspülung arbeitende Filtrationsvorrichtung mit geringem Aufwand in eine Filtrationsvorrichtung umgebaut werden können, die mit einer Eigendruckrückspülung arbeitet.

Dieses Problem wird bei der Erfindung durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, die Antriebswelle hohl auszugestalten, durch eine im Gehäuse auf der Reinseite stationär angeordnete Hülse hindurchzuführen und fluidisch mit dem Zuführkanal zu verbinden. Ferner ist die Hülse erfindungsgemäß radial für die Flüssigkeit durchlässig ausgestaltet und außerdem ist die Antriebswelle im Bereich der Hülse ebenfalls für die Flüssigkeit durchlässig ausgestaltet. Somit entsteht ein reinseitiger Flüssigkeitspfad, der von der Reinseite durch die Hülse und durch die Antriebswelle in einen Innenraum der Antriebswelle führt und von dort in den Zuführkanal führt, der dann zur jeweiligen Austrittsöffnung führt. Hierdurch lässt sich eine Eigendruckrückspülung mit der Reinseite, also intern entnommener Flüssigkeit realisieren. Ferner besitzt die Filtrationsvorrichtung für die Eigendruckrückspülung einen besonders einfachen Aufbau.

Damit die Hülse für die Flüssigkeit durchlässig ist, kann sie zumindest eine Radialöffnung aufweisen. Bevorzugt sind jedoch mehrere Radialöffnungen, die axial und in Umfangsrichtung verteilt angeordnet sein können. Die Antriebswelle kann durch wenigstens eine Radialöffnung für die Flüssigkeit durchlässig ausgestaltet sein. Bevorzugt sind auch hier mehrere Radialöffnungen, die axial und in Umfangsrichtung verteilt angeordnet sein können. Zweckmäßig sind ein Muster der Radialöffnungen der Hülse und ein Muster der Radialöffnungen der Antriebswelle so aufeinander abgestimmt, dass in jeder relativen Drehlage zwischen Antriebswelle und Hülse zumindest eine teilweise radiale Überlappung zwischen wenigstens einer Radialöffnung der Hülse und wenigstens einer Radialöffnung der Antriebswelle vorliegt. Zusätzlich oder alternativ kann vorgesehen sein, dass radial zwischen der Antriebswelle und der Hülse ein Ringraum ausgebildet ist, der durch die wenigstens eine Radialöffnung der Hülse mit der Reinseite des Gehäuses und durch die wenigstens eine Radialöffnung der Antriebswelle mit dem Innenraum der Antriebswelle fluidisch kommuniziert.

Entsprechend einer vorteilhaften Ausführungsform kann der Zuführkanal zwei axial voneinander beabstandete Lager aufweisen, an denen der Filterkörper um seine Längsmittelachse drehbar gelagert ist. Somit erhält der Zuführkanal eine Doppelfunktion, da er zur Lagerung des Filterkörpers verwendet werden kann.

Zweckmäßig kann der Zuführkanal distal zur Antriebswelle drehfest an einer Bodenplatte angeordnet sein, die ihrerseits drehfest mit einer proximal zur Antriebswelle angeordneten Ringscheibe verbunden ist, wobei diese Ringscheibe drehfest mit dem Gehäuse verbunden ist und im Gehäuse die Rohseite von der Reinseite axial trennt. Auf diese Weise kann die Bodenplatte beabstandet zur Ringscheibe im Gehäuse positioniert werden, ohne dass eine zusätzliche, separate Fixierung der Bodenplatte am Gehäuse erforderlich ist. Hierdurch vereinfacht sich die gewünschte stationäre Positionierung des Zuführkanals im Gehäuse. Die Bodenplatte kann beispielsweise über mehrere, in der Umfangsrichtung verteilt angeordnete Zuganker oder Zugstangen mit der Ringscheibe verbunden sein.

Bei einer vorteilhaften Weiterbildung kann der Filterkörper einenends gegen die Bodenplatte und anderenends gegen die Ringscheibe abgedichtet sein. Der relativ zum Gehäuse drehbare Filterkörper ist dadurch trotz seiner Drehbarkeit bezüglich des Gehäuses gegenüber den stationären Bauteilen abgedichtet, wodurch die Trennung zwischen Reinseite und Rohseite trotz der Beweglichkeit des Filterkörpers gewährleistet werden kann.

Bei einer anderen vorteilhaften Ausführungsform kann die Antriebswelle drehfest mit einer ersten Lagerhülse verbunden sein, die auf einer Lagerbuchse drehbar angeordnet ist und wenigstens einen radial abstehenden Mitnehmerarm aufweist. Zweckmäßig kann dann der Filterkörper über wenigstens einen Radialsteg drehfest mit einer zweiten Lagerhülse verbunden sein, die ebenfalls auf der Lagerbuchse drehbar angeordnet ist. Dabei können die beiden Lagerhülsen axial aneinander stoßen. Der Filterkörper kann zumindest eine zum Mitnehmerarm komplementäre Mitnehmeraufnahme aufweisen, die drehfest am Filterkörper angeordnet ist und mit dem jeweiligen Mitnehmerarm zur Drehmomentübertragung in Eingriff steht. Hierdurch erhält die Filtrationsvorrichtung eine modulare Bauweise, da besonders einfach unterschiedliche Filterkörper gegeneinander ausgetauscht werden können, da die Mitnehmerkopplung zwischen dem Mitnehmerarm und der Mitnehmeraufnahme beim Demontieren der Filtrationsvorrichtung besonders einfach gelöst werden kann und beim Montieren der Filtrationsvorrichtung besonders einfach wieder hergestellt werden kann. Besonders zweckmäßig ist dabei eine Weiterbildung, bei welcher der Zuführkanal durch die besagte Lagerbuchse hindurch mit dem Innenraum der Antriebswelle fluidisch verbunden ist.

Insbesondere ist der Zuführkanal koaxial zur Längsmittelachse des Filterkörpers angeordnet. Insbesondere ist die Antriebswelle koaxial zur Längsmittelachse des Filterkörpers angeordnet. Zweckmäßig sind somit Zuführkanal und Antriebswelle zueinander koaxial ausgerichtet.

Die Lagerbuchse kann gemäß einer anderen vorteilhaften Weiterbildung drehfest am Zuführkanal angeordnet sein und insbesondere das zur Antriebswelle proximale Lager des Zufuhrkanals bilden.

Bei einer anderen vorteilhaften Ausführungsform kann der Zuführkanal zumindest eine Düse aufweisen, die austrittsseitig die jeweilige Austrittsöffnung besitzt. Durch die Düse kann die gezielte Anströmung des zu reinigenden Umfangsabschnitts verbessert werden.

Der Filterkörper kann zumindest zwei Filterelemente aufweisen, die axial aneinander gereiht sind. Der Zuführkanal kann dann für jedes Filterelement eine separate Düse aufweisen, die sich jeweils über die gesamte axiale Höhe des jeweiligen Filterelements erstreckt.

Die Filtrationsvorrichtung kann bei einer anderen Ausführungsform ein Tauchrohr aufweisen, das sich ausgehend von der Ringscheibe im Gehäuse auf der Rohseite erstreckt und distal zur Ringscheibe axial offen ist. Dieses Tauchrohr kann insbesondere den Abführkanal umschließen. Durch das Tauchrohr ist die in das Gehäuse eingeleitete, zu reinigende Flüssigkeit gezwungen, zunächst in Richtung des offenen Endes des Tauchrohrs zu strömen, um dann zum Filterkörper gelangen zu können. Das Tauchrohr umschließt dabei den Filterkörper. Von besonderem Vorteil ist dann eine Ausführungsform, bei welcher der Einlassanschluss tangential in das Gehäuse hineinführt, so dass in einem radial zwischen Tauchrohr und Gehäusemantel ausgebildeten Ringraum eine Rotationsströmung entsteht, die für eine verbesserte Vorabscheidung größerer, schwererer Partikel bzw. allgemein Verunreinigungen sorgt.

Der Filterkörper ist im Gehäuse zweckmäßig stehend angeordnet, also derart, dass seine Längsmittelachse aufrecht orientiert ist, also insbesondere weitgehend vertikal orientiert ist.

Das Gehäuse kann an einer tiefliegenden Stelle einen Entleerungsanschluss aufweisen, durch den das Gehäuse entleert werden kann.

Die Erfindung umfasst außerdem ein Verfahren, das eine Umrüstung einer Filtrationsvorrichtung mit Fremddruckrückspülung in eine Filtrationsvorrichtung mit Eigendruckrückspülung ermöglicht. Für die Fremddruckrückspülung ist das Gehäuse mit einem Rückspülmittelanschluss ausgestattet, über den das jeweilige Rückspülmedium mit dem entsprechenden Fremddruck zugeführt werden kann. Mit diesem Rückspülmittelanschluss kann grundsätzlich auch die hier vorgestellte Filtrationsvorrichtung mit Eigendruckrückspülung ausgestattet sein, der jedoch für den Betrieb mit Eigendruckrückspülung deaktiviert oder geschlossen oder entfernt wird.

Jedenfalls kann besagte Filtrationsvorrichtung mit Fremddruckrückspülung eine modifizierte Antriebswelle aufweisen, die im Bereich der Hülse für die Flüssigkeit undurchlässig ist, also insbesondere keine Radialöffnung besitzt. Zusätzlich kann besagte Filtrationsvorrichtung mit Fremddruckrückspülung eine modifizierte Hülse aufweisen, die für die Flüssigkeit undurchlässig ist und insbesondere keine Radialöffnung aufweist. Beim erfindungsgemäßen Verfahren wird einerseits die vorhandene Antriebswelle ohne Radialöffnung durch eine Antriebswelle mit wenigstens einer Radialöffnung ersetzt. Andererseits wird die vorhandene Hülse ohne Radialöffnung durch eine Hülse mit wenigstens einer Radialöffnung ersetzt. Des Weiteren kann die Antriebswelle, unabhängig davon ob sie nun im Bereich der Hülse für die Flüssigkeit durchlässig ausgestaltet ist oder nicht, so ausgestaltet sein, dass ihr Innenraum mit dem zuvor genannten Rückspülmittelanschluss fluidisch verbunden ist. Beispielsweise kann hierzu die Antriebswelle durch eine Wand des Gehäuses hindurchgeführt sein und außen am Gehäuse in einem Ringraum angeordnet sein. Dieser Ringraum kann nun fluidisch mit dem Rückspülmittelanschluss verbunden sein. Ferner kann die Antriebswelle zweckmäßig im Bereich dieses Ringraums für die Flüssigkeit durchlässig ausgestaltet sein, beispielsweise durch wenigstens eine Radialöffnung. Vorzugsweise sind auch hier mehrere Radialöffnungen vorgesehen, die in der Umfangsrichtung und/oder in der Axialrichtung verteilt sein können.

Um also die mit Fremddruckrückspülung arbeitende Filtrationsvorrichtung in eine mit Eigendruckrückspülung arbeitende Filtrationsvorrichtung umzubauen, reicht es beispielsweise aus, die für die Flüssigkeit undurchlässige Hülse durch eine für die Flüssigkeit durchlässige Hülse auszutauschen. Zusätzlich wird die im Bereich der Hülse für die Flüssigkeit undurchlässige Antriebswelle durch eine im Bereich der Hülse für die Flüssigkeit durchlässige Antriebswelle ausgetauscht. Da die Filtrationsvorrichtung mit Fremddruckrückspülung mit dem Rückspülmittelanschluss ausgestattet ist, muss dieser noch deaktiviert oder gesperrt oder entfernt werden, um die Filtrationsvorrichtung von einem Betrieb mit Fremddruckrückspülung in einen Betrieb mit Eigendruckrückslpülung umzubauen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: ein vereinfachter Längsschnitt durch eine Filtrationsvorrichtung,
- Fig. 2: eine geschnittene isometrische Ansicht der Filtrationsvorrichtung im Bereich einer Antriebswelle, bei einer anderen Ausführungsform.

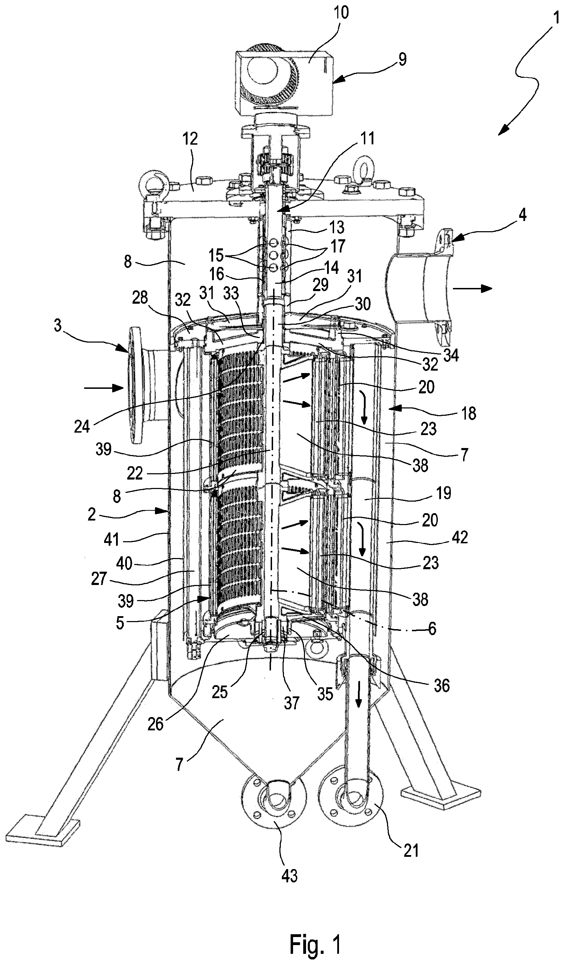

Entsprechend Figur 1 umfasst eine Filtrationsvorrichtung 1 ein Gehäuse 2, das einen rohseitigen Einlassanschluss 3 und einen reinseitigen Auslassanschluss 4 aufweist. Die Filtrationsvorrichtung 1 weist außerdem einen zylindrischen Filterkörper 5 auf, der im Betrieb der Filtrationsvorrichtung 1 radial von der zu reinigenden Flüssigkeit durchströmbar ist. Der Filterkörper 5 ist im Gehäuse 2 um seine Längsmittelachse 6 drehbar angeordnet und trennt im Gehäuse 2 eine außenliegende Rohseite 7 von einer innenliegenden Reinseite 8 radial.

Ferner umfasst die Filtrationsvorrichtung 1 einen Drehantrieb 9, mit dessen Hilfe der Filterkörper 5 um seine Längsmittelachse 6 rotierend angetrieben werden kann. Hierzu weist der Drehantrieb 9 einen Antriebsmotor 10 auf, der mit einer Antriebswelle 11 antriebsverbunden ist. Die Antriebswelle 11 ist zum einen durch eine Wand 12 des Gehäuses 2 hindurchgeführt, die im gezeigten Beispiel durch einen vergleichsweise massiven Deckel gebildet ist. Zum anderen ist die Antriebswelle 11 im Inneren des Gehäuses 2 durch eine im Gehäuse 2 stationär angeordnete Hülse 13 hindurchgeführt. Hierzu ist die Hülse 13 hohl. Auch die Antriebswelle 11 ist hohl ausgestaltet, so dass sie einen Innenraum 14 besitzt. Die Antriebswelle 11 weist mehrere Radialöffnungen 15 auf, durch welche hindurch der Innenraum 14 mit einem Ringraum 16 fluidisch verbunden ist, der radial zwischen der Antriebswelle 11 und der Hülse 13 ausgebildet ist. Die Hülse 13 besitzt mehrere Radialöffnungen 17, durch welche hindurch der Ringraum 16 mit dem Inneren des Gehäuses 2 fluidisch verbunden ist. Da die Hülse 13 auf der Reinseite 8 angeordnet ist, ist somit letztlich der Innenraum 14 über die Radialöffnung 15, 17 und den Ringraum 16 mit der Reinseite 8 des Gehäuses 2 verbunden.

Die Filtrationsvorrichtung 1 ist außerdem mit einer Rückspüleinrichtung 18 ausgestattet, mit deren Hilfe ein Umfangsabschnitt des Filterkörpers 5 mittels Rückspülung gereinigt werden kann. Da der Filterkörper 5 während der Filtration von außen nach innen durchströmt wird, erfolgt bei der Rückspülung eine Durchströmung des Filterkörpers 5 im jeweiligen Umfangsabschnitt mit einem geeigneten Rückspülmittel von innen nach außen. Die Rückspüleinrichtung 18 umfasst einen Abführkanal 19, der auf der Rohseite 7 im Gehäuse 2 stationär angeordnet ist, der eintrittsseitig zumindest eine dem zu spülenden Umfangsabschnitt des Filterkörpers 5 zugewandte Eintrittsöffnung 20 aufweist und der austrittsseitig mit einem Abführkanalanschluss 21 verbunden ist, der am Gehäuse 2 ausgebildet ist. Ferner umfasst die Rückspüleinrichtung 18 einen Zuführkanal 22, der auf der Reinseite 8 im Gehäuse 2 stationär angeordnet ist, der austrittsseitig zumindest eine dem zu spülenden Umfangsabschnitt des Filterkörpers 5 zugewandte Austrittsöffnung 23 aufweist und der eintrittsseitig mit dem Innenraum 14 der Antriebswelle 11 fluidisch verbunden ist. Auf diese Weise kann eine Eigendruckrückspülung realisiert werden, da zur Reinigung gereinigte Flüssigkeit von der Reinseite 8 durch die Radialöffnungen 15, 17 und den Ringraum 16 in den Innenraum 14 gelangt und über den Zuführkanal 22 zu der jeweiligen Austrittsöffnung 23 strömt, dann den Umfangsabschnitt des Filterkörpers 5 von innen nach außen durchströmt, anschließend durch die jeweilige Eintrittsöffnung 20 in den Abführkanal 19 gelangt und von diesem über den Abführkanalanschluss 21 abgeführt werden kann.

Der Zuführkanal 22 besitzt hier zwei axial voneinander beabstandete Lager, nämlich ein bezüglich der Antriebswelle 11 proximal angeordnetes erstes Lager 24 und ein bezüglich der Antriebswelle 11 distal angeordnetes zweites Lager 25. An diesen Lagern 24, 25 ist der Filterkörper 5 um seine Längsmittelachse 6 drehbar gelagert. Der Zuführkanal 22 ist außerdem distal zur Antriebswelle 11 drehfest an einer Bodenplatte 26 angeordnet. Die Bodenplatte 26 ist über mehrere, in der Umfangsrichtung verteilt angeordnete Zugstangen 27 drehfest mit einer Ringscheibe 28 verbunden, die proximal zur Antriebswelle 11 drehfest mit dem Gehäuse 2 verbunden ist. Diese Ringscheibe 28 trennt innerhalb des Gehäuses 2 ebenfalls die Rohseite 7 von der Reinseite 8, jedoch axial. Der Filterkörper 5 ist nun einenends, nämlich distal zur Antriebswelle 11 gegen die Bodenplatte 26 abgedichtet und anderenends, nämlich proximal zur Antriebswelle 11 gegen die Ringscheibe 28 abgedichtet.

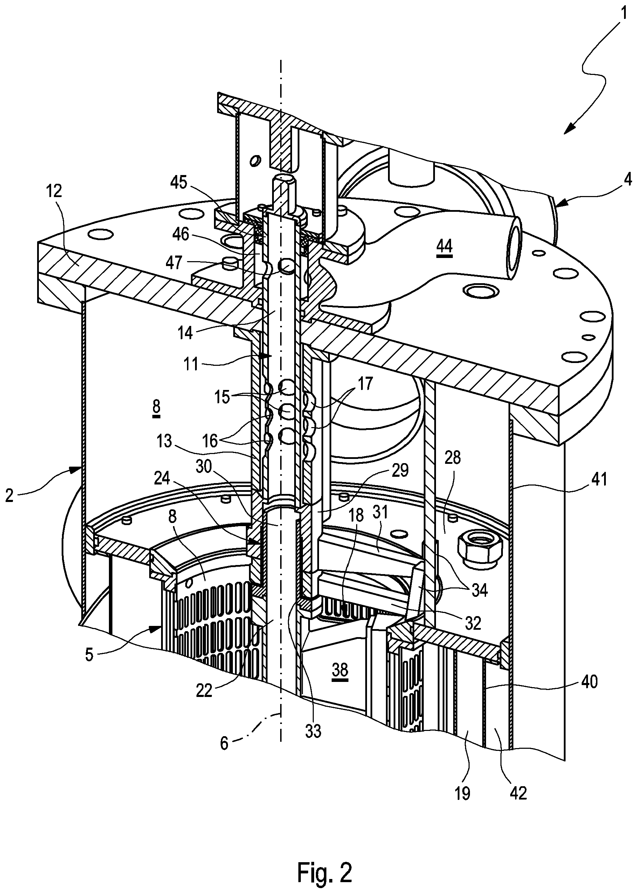

Entsprechend den Figuren 1 und 2 ist die Antriebswelle 11 drehfest mit einer ersten Lagerhülse 29 verbunden, die auf einer Lagerbuchse 30 um die Längsmittelachse 6 drehbar gelagert ist. Die erste Lagerhülse 29 weist zumindest einen radial abstehenden Mitnehmerarm 31 auf, der mit der ersten Lagerhülse 29 mitrotiert. Der Filterkörper 5 ist über wenigstens einen Radialsteg 32 drehfest mit einer zweiten Lagerhülse 33 verbunden, die ebenfalls auf der Lagerbuchse 30 drehbar um die Längsmittelachse 6 angeordnet ist. Des Weiteren besitzt der Filterkörper 5 zumindest eine Mitnehmeraufnahme 34, die komplementär zum jeweiligen Mitnehmerarm 31 geformt ist und die drehfest am Filterkörper 5 angeordnet ist. Der jeweilige Mitnehmerarm 31 steht mit der zugehörigen Mitnehmeraufnahme 34 zur Übertragung von Drehmomenten in Eingriff.

Der Zuführkanal 22 ist nun axial fluchtend zur hohlen Lagerbuchse 30 angeordnet und axial fluchtend zur Antriebswelle 11 angeordnet. Somit ist der Zuführkanal 22 durch die Lagerbuchse 30 hindurch mit dem Innenraum 14 der Antriebswelle 11 fluidisch verbunden. Im Beispiel ist die Lagerbuchse 30 drehfest am Zuführkanal 22 angeordnet.

Für die Lagerung des Filterkörpers 5 am zweiten Lager 25 kann eine dritte Lagerhülse 35 vorgesehen sein, die über weitere Radialstege 36 drehfest mit dem Filterkörper 5 verbunden ist und die auf einer weiteren Lagerbuchse 37 drehbar gelagert ist, wobei diese weitere Lagerbuchse 37 am Zuführkanal 22 integral ausgeformt sein kann oder an der Bodenplatte 26 angeordnet sein kann.

Der Zuführkanal 22 besitzt zumindest eine Düse 38, die austrittsseitig die jeweilige Austrittsöffnung 23 aufweist. Im Beispiel ist der Filterkörper 5 aus zwei separaten Filterelementen 39 zusammengebaut. Der Zuführkanal 22 besitzt in diesem Fall für jedes Filterelement 39 eine separate Düse 38, wobei sich die jeweilige Düse 38 innerhalb des abzureinigenden Umfangsabschnitts über die gesamte axiale Höhe des jeweiligen Filterelements 39 erstreckt.

Die hier gezeigte Filtrationsvorrichtung 1 ist außerdem mit einem Tauchrohr 40 ausgestattet, das auf der Rohseite im Gehäuse 2 angeordnet ist, das von der Ringscheibe 28 ausgeht, das im Beispiel den Filterkörper 5 und den Abführkanal 19 umschließt und das distal zur Ringscheibe 28 axial offen ist. Ferner ist der Einlassanschluss 3 zweckmäßig tangential an das Gehäuse 2 angebaut, so dass in einem radial zwischen einem zylindrischen Mantel 41 des Gehäuses 2 und dem zylindrischen Tauchrohr 40 ausgebildeter Ringraum 42 eine Rotationsströmung entsteht.

Gemäß Figur 1 ist der Filterkörper 5 im Gehäuse 2 im Wesentlichen stehend angeordnet und besitzt dementsprechend eine aufrechte, insbesondere eine vertikale, Längsmittelachse 6. Über einen Leerlaufanschluss 43 ist das Gehäuse 2 entleerbar.

Gemäß Figur 2 kann die Filtrationsvorrichtung 1 optional einen Rückspülmittelanschluss 44 aufweisen, der für einen Betrieb der Filtrationsvorrichtung 1 mit Eigendruckrückspülung deaktiviert oder versperrt ist. Die Antriebswelle 11 durchdringt den Deckel 12 und besitzt einen Axialabschnitt 45, der sich außerhalb des Gehäuses 2 befindet und innerhalb eines Ringraums 46 angeordnet ist. In diesem Axialabschnitt, also im Bereich des Ringraums 46 ist die Antriebswelle 11 mit mindestens einer Radialöffnung 47 ausgestattet, wodurch der Innenraum 14 durch die jeweilige Radialöffnung 47 mit dem Ringraum 46 kommunizierend verbunden ist. Der Rückspülmittelanschluss 44 ist nun seinerseits mit besagtem Ringraum 46 fluidisch verbunden.

Um nun die in Figur 2 gezeigte Ausführungsform der bei gesperrtem oder deaktiviertem oder fehlendem Rückspülmittelanschluss 44 grundsätzlich mit Eigendruckrückspülung betreibbaren Filtrationsvorrichtung 1 in eine Filtrationsvorrichtung 1 umzurüsten, die mit Fremddruckrückspülung arbeitet, muss lediglich die Hülse 13 durch eine modifizierte Hülse 13 ersetzt werden, die für die Flüssigkeit undurchlässig ist, also insbesondere keine Radialöffnung 17 aufweist. Somit ist die fluidische Verbindung zwischen dem Innenraum 14 und der Reinseite 8 des Gehäuses 2 getrennt. Zusätzlich oder alternativ ist eine derartige Umrüstung auch dadurch realisierbar, dass anstelle der hier gezeigten Antriebswelle 11 eine modifizierte Antriebswelle 11 verwendet wird, die im Bereich der Hülse 13 für die Flüssigkeit undurchlässig ist, also insbesondere keine Radialöffnung 15 aufweist. Auch hierdurch ist die fluidische Kopplung zwischen Innenraum 14 und Reinseite 8 des Gehäuses 2 unterbrochen. Wird nun der Rückspülmittelanschluss 44 aktiviert bzw. montiert, kann ein grundsätzlich beliebiges Spülmittel mit einem grundsätzlich beliebigen Fremddruck über den Innenraum 14 dem Zuführkanal 22 zugeführt und für die Rückspülung genutzt werden.

## Patentansprüche

1. Filtrationsvorrichtung zum Filtern von Flüssigkeiten,
- mit einem Gehäuse (2), das einen rohseitigen Einlassanschluss (3) und einen reinseitigen Auslassanschluss (4) aufweist,
- mit einem zylindrischen, radial von der Flüssigkeit durchströmbaren Filterkörper (5), der im Gehäuse (2) um seine Längsmittelachse (6) drehbar angeordnet ist und im Gehäuse (2) eine außenliegende Rohseite (7) von einer innenliegenden Reinseite (8) radial trennt,
- mit einem Drehantrieb (9) zum drehenden Antreiben des Filterkörpers (5), der eine hohle Antriebswelle (11) aufweist, die sich durch eine im Gehäuse (2) auf der Reinseite (8) angeordnete stationäre Hülse (13) hindurcherstreckt und die mit dem Filterkörper (5) zur Drehmomentübertragung gekoppelt ist,
- mit einer Rückspüleinrichtung (18) zum Rückspülen eines Umfangssegments des Filterkörpers (5), die einen stationär auf der Rohseite (7) im Gehäuse (2) angeordneten Abführkanal (19) aufweist, der eintrittsseitig zumindest eine dem zu spülenden Umfangsabschnitt zugewandte Eintrittsöffnung (20) aufweist und der austrittsseitig mit einem am Gehäuse (2) ausgebildeten Abführkanalanschluss (21) verbunden ist,
- wobei die Rückspüleinrichtung (18) einen stationär auf der Reinseite (8) im Gehäuse (2) angeordneten Zuführkanal (22) aufweist, der austrittsseitig zumindest eine dem zu spülenden Umfangsabschnitt zugewandte Austrittsöffnung (23) aufweist und der mit dem Innenraum (14) der Antriebswelle (11) fluidisch verbunden ist,
**dadurch gekennzeichnet,**
- **dass** die Antriebswelle (11) im Bereich der Hülse (13) wenigstens eine Radialöffnung (15) aufweist,
- **dass** die Hülse (13) wenigstens eine Radialöffnung (17) aufweist,
- **dass** ein reinseitiger Flüssigkeitspfad vorgesehen ist, der von der Reinseite (8) durch die Hülse (13) und durch die Antriebswelle (11) in einen Innenraum (14) der Antriebswelle (11) und von dort in den Zuführkanal (22) führt.

2. Filtrationsvorrichtung nach Anspruch 1,
**dadurch gekennzeichnet,**
**dass** der Zuführkanal (22) zwei axial voneinander beabstandete Lager (24, 25) aufweist, an denen der Filterkörper (5) um seine Längsmittelachse (6) drehbar gelagert ist.

3. Filtrationsvorrichtung nach Anspruch 1 oder 2,
**dadurch gekennzeichnet,**
**dass** der Zuführkanal (22) distal zur Antriebswelle (11) drehfest an einer Bodenplatte (26) angeordnet ist, die drehfest mit einer proximal zur Antriebswelle (11) angeordneten Ringscheibe (28) verbunden ist, die drehfest mit dem Gehäuse (2) verbunden ist und im Gehäuse (2) die Rohseite (7) von der Reinseite (8) axial trennt.

4. Filtrationsvorrichtung nach Anspruch 3,
**dadurch gekennzeichnet,**
**dass** der Filterkörper (5) einenends gegen die Bodenplatte (26) und anderenends gegen die Ringscheibe (28) abgedichtet ist.

5. Filtrationsvorrichtung nach einem der Ansprüche 1 bis 4,
**dadurch gekennzeichnet,**
- **dass** die Antriebswelle (11) drehfest mit einer ersten Lagerhülse (29) verbunden ist, die auf einer Lagerbuchse (30) drehbar angeordnet ist und wenigstens einen radial abstehenden Mitnehmerarm (31) aufweist,
- **dass** der Filterkörper (5) über wenigstens einen Radialsteg (32) drehfest mit einer zweiten Lagerhülse (33) verbunden ist, die ebenfalls auf der Lagerbuchse (30) drehbar angeordnet ist,
- **dass** der Filterkörper (5) zumindest eine zum Mitnehmerarm (31) komplementäre Mitnehmeraufnahme (34) aufweist, die drehfest am Filterkörper (5) angeordnet ist und mit dem jeweiligen Mitnehmerarm (31) zur Drehmomentübertragung in Eingriff steht.

6. Filtrationsvorrichtung nach Anspruch 5,
**dadurch gekennzeichnet,**
**dass** der Zuführkanal (22) durch die Lagerbuchse (30) hindurch mit dem Innenraum (14) der Antriebswelle (11) fluidisch verbunden ist.

7. Filtrationsvorrichtung nach Anspruch 5 oder 6,
**dadurch gekennzeichnet,**
**dass** die Lagerbuchse (30) drehfest am Zuführkanal (-22) angeordnet ist.

8. Verfahren zum Umrüsten einer Filtrationsvorrichtung mit Fremddruckrückspülung in eine Filtrationsvorrichtung (1) mit Eigendruckrückspülung nach einem der Ansprüche 1 bis 7,
- bei dem eine vorhandene Antriebswelle ohne Radialöffnung durch eine Antriebswelle (11) mit wenigstens einer Radialöffnung (15) ersetzt wird,
- bei dem eine vorhandene Hülse ohne Radialöffnung durch eine Hülse (13) mit wenigstens einer Radialöffnung (17) ersetzt wird,
- bei dem ein vorhandener Rückspülmittelanschluss (44) deaktiviert oder gesperrt oder entfernt wird.

## Claims

1. Filtration device for filtering liquids,
- having a housing (2) which has a dirty-side inlet connection (3) and a clean-side outlet connection (4),
- having a cylindrical filter body (5) through which the liquid can flow radially and which is rotatably arranged in the housing (2) about the longitudinal centre axis (6) thereof and which in the housing (2) radially separates an outer dirty side (7) from an inner clean side (8),
- having a rotary drive (9) which is for rotatably driving the filter body (5) and which has a hollow drive shaft (11) which extends through a stationary sleeve (13) which is arranged in the housing (2) at the clean side (8) and which is coupled to the filter body (5) for torque transmission,
- having a backwash device (18) for backwashing a peripheral segment of the filter body (5), which has a discharge channel (19) which is arranged in a stationary manner at the dirty side (7) in the housing (2) and which has at the inlet side at least one inlet opening (20) which faces the peripheral portion to be cleaned and which is connected at the outlet side to a discharge channel connection (21) which is formed on the housing (2),
- wherein the backwash device (18) has a supply channel (22) which is arranged in a stationary manner at the clean side (8) in the housing (2) and which has at the outlet side at least one outlet opening (23) which faces the peripheral portion to be cleaned and which is connected in fluid terms to the inner space (14) of the drive shaft (11), **characterised in**
- **that** the drive shaft (11) has in the region of the sleeve (13) at least one radial opening (15),
- **that** the sleeve (13) has at least one radial opening (17),
- **that** there is provided a clean-side fluid path which leads from the clean side (8) through the sleeve (13) and through the drive shaft (11) into an inner space (14) of the drive shaft (11) and from there into the supply channel (22).

2. Filtration device according to claim 1,
**characterised in**
**that** the supply channel (22) has two bearings (24, 25) which are axially spaced apart from each other and on which the filter body (5) is rotatably supported about the longitudinal centre axis (6) thereof.

3. Filtration device according to claim 1 or 2,
**characterised in**
**that** the supply channel (22) is arranged distally with respect to the drive shaft (11) in a rotationally secure manner on a base plate (26) which is connected in a rotationally secure manner to an annular disc (28) which is arranged proximally with respect to the drive shaft (11) and which is connected in a rotationally secure manner to the housing (2) and which in the housing (2) axially separates the dirty side (7) from the clean side (8).

4. Filtration device according to claim 3,
**characterised in**
**that** the filter body (5) is sealed at one end against the base plate (26) and at the other end against the annular disc (28).

5. Filtration device according to any one of claims 1 to 4,
**characterised in**
- **that** the drive shaft (11) is connected in a rotationally secure manner to a first bearing sleeve (29) which is rotatably arranged on a bearing bush (30) and which has at least one radially protruding carrier arm (31),
- **that** the filter body (5) is connected by means of at least one radial web (32) in a rotationally secure manner to a second bearing sleeve (33), which is also rotatably arranged on the bearing bush (30),
- **that** the filter body (5) has at least one carrier receiving member (34) which complements the carrier arm (31) and which is arranged in a rotationally secure manner on the filter body (5) and which is in engagement with the respective carrier arm (31) for torque transmission.

6. Filtration device according to claim 5,
**characterised in**
**that** the supply channel (22) is connected in fluid terms through the bearing bush (30) to the inner space (14) of the drive shaft (11).

7. Filtration device according to claim 5 or 6,
**characterised in**
**that** the bearing bush (30) is arranged in a rotationally secure manner on the supply channel (22).

8. Method for retrofitting a filtration device with external pressure backwash in a filtration device (1) with internal pressure backwashing according to any one of claims 1 to 7,
- in which a drive shaft which is provided without any radial opening is replaced by a drive shaft (11) having at least one radial opening (15),
- in which a sleeve which is provided without any radial opening is replaced by a sleeve (13) having at least one radial opening (17),
- in which a backwash medium connection (44) which is present is deactivated or locked or removed.

## Revendications

1. Dispositif de filtration pour la filtration de liquides,
- avec un boîtier (2) qui présente un raccord d'admission (3) côté brut et un raccord d'évacuation (4) côté pur,
- avec un corps de filtre (5) cylindrique pouvant être traversé radialement par le liquide, qui est disposé de manière rotative dans le boîtier (2) autour de son axe médian longitudinal (6) et, dans le boîtier (2), sépare radialement un côté brut (7) extérieur d'un côté pur (8) intérieur,
- avec un entraînement rotatif (9) pour l'entraînement rotatif du corps de filtre (5) qui présente un arbre d'entraînement creux (11) qui s'étend au travers d'une douille (13) stationnaire disposée dans le boîtier (2) sur le côté pur (8) et qui est couplé au corps de filtre (5) pour la transmission de couple,
- avec un dispositif de lavage à contre-courant (18), pour le lavage à contre-courant d'un segment périphérique du corps de filtre (5), qui présente un canal d'évacuation (19) disposé de manière stationnaire sur le côté brut (7) dans le boîtier (2), qui présente côté admission au moins une ouverture d'admission (20) tournée vers la section périphérique à laver et qui est relié côté évacuation à un raccord de canal d'évacuation (21) réalisé au niveau du boîtier (2),
- dans lequel le dispositif de lavage à contre-courant (18) présente un canal d'alimentation (22), disposé de manière stationnaire sur le côté pur (8) dans le boîtier (2), qui présente côté évacuation au moins une ouverture d'évacuation (23) tournée vers la section périphérique à laver et qui est relié fluidiquement à l'espace intérieur (14) de l'arbre d'entraînement (11),
**caractérisé en ce**
- **que** l'arbre d'entraînement (11) présente, dans la zone de la douille (13), au moins une ouverture radiale (15),
- **que** la douille (13) présente au moins une ouverture radiale (17),
- **qu'**une voie de liquide côté pur est prévue, laquelle mène du côté pur (8) au travers de la douille (13) et au travers de l'arbre d'entraînement (11) dans un espace intérieur (14) de l'arbre d'entraînement (11) et de là, dans le canal d'alimentation (22).

2. Dispositif de filtration selon la revendication 1,
**caractérisé en ce**
**que** le canal d'alimentation (22) présente deux paliers (24, 25) espacés axialement l'un de l'autre au niveau desquels le corps de filtre (5) est logé de manière rotative autour de son axe médian longitudinal (6).

3. Dispositif de filtration selon la revendication 1 ou 2,
**caractérisé en ce**
**que** le canal d'alimentation (22) est disposé de manière distale à l'arbre d'entraînement (11) sans pouvoir tourner sur une plaque de fond (26) qui est reliée sans pouvoir tourner à un disque annulaire (28), disposé de manière proximale à l'arbre d'entraînement (11), qui est relié sans pouvoir tourner au boîtier (2) et sépare axialement, dans le boîtier (2), le côté brut (7) du côté pur (8).

4. Dispositif de filtration selon la revendication 3,
**caractérisé en ce**
**que** le corps de filtre (5) est rendu étanche à une extrémité contre la plaque de fond (26) et à l'autre extrémité contre le disque annulaire (28).

5. Dispositif de filtration selon l'une quelconque des revendications 1 à 4, **caractérisé en ce**
- **que** l'arbre d'entraînement (11) est relié sans pouvoir tourner à une première douille de palier (29) qui est disposée de manière rotative sur un coussinet (30) et présente au moins un bras d'entraînement (31) dépassant radialement,
- **que** le corps de filtre (5) est relié par le biais d'au moins une nervure radiale (32) sans pouvoir tourner à une seconde douille de palier (33) qui est aussi disposée de manière rotative sur le coussinet (30),
- **que** le corps de filtre (5) présente au moins un logement d'entraînement (34), complémentaire au bras d'entraînement (31), qui est disposé sans pouvoir tourner au niveau du corps de filtre (5) et est en prise avec le bras d'entraînement (31) respectif pour la transmission de couple.

6. Dispositif de filtration selon la revendication 5,
**caractérisé en ce**
**que** le canal d'alimentation (22) est relié fluidiquement au travers du coussinet (30) à l'espace intérieur (14) de l'arbre d'entraînement (11).

7. Dispositif de filtration selon la revendication 5 ou 6,
**caractérisé en ce**
**que** le coussinet (30) est disposé sans pouvoir tourner au niveau du canal d'alimentation (22).

8. Procédé de rééquipement d'un dispositif de filtration avec un lavage à contre-courant de pression externe dans un dispositif de filtration (1) avec un lavage à contre-courant de propre pression selon l'une quelconque des revendications 1 à 7,
- où un arbre d'entraînement présent sans ouverture radiale est remplacé par un arbre d'entraînement (11) avec au moins une ouverture radiale (15),
- où une douille présente sans ouverture radiale est remplacée par une douille (13) avec au moins une ouverture radiale (17),
- où un raccord de moyen de lavage à contre-courant (44) présent est désactivé ou bloqué ou retiré.
